Europäisches Patentamt

European Patent Office

Office européen des brevets

(11) Publication number: **0 410 418 A2**

# EUROPEAN PATENT APPLICATION

(21) Application number: **90114264.6**

(22) Date of filing: **25.07.90**

(51) Int. Cl.5: **G06F 3/023**

(30) Priority: **26.07.89 JP 193086/89**

(43) Date of publication of application:
**30.01.91 Bulletin 91/05**

(84) Designated Contracting States:
**DE FR GB**

(71) Applicant: **MITSUBISHI DENKI KABUSHIKI KAISHA**
**2-2-3, Marunouchi**
**Chiyoda-ku Tokyo(JP)**

(72) Inventor: **Mura, Masayuki, c/o Mitsubishi Denki Kabushiki K.**
**Computer Seisakusho, 325, Kamimachiya Kamakura-shi, Kanagawa(JP)**

(74) Representative: **Pellmann, Hans-Bernd, Dipl.-Ing. et al**
**Patentanwaltsbüro**
**Tiedtke-Bühling-Kinne-Grupe-Pellmann-Grams-Struif Bavariaring 4**
**D-8000 München 2(DE)**

(54) Input device for computer and method for input interrupt.

(57) An input device for a computer, which is used for executing a program in a computer by inputting a command and data, temporarily stores the contents of a series of inputs from an input unit in an auxiliary storage unit, and generates an input interrupt by reading the contents of the series of inputs from the auxiliary storage unit. In a method for input interrupt in a computer, which is used for generating an input interrupt in response to an input from an input unit, an interrupt is generated collectively for the contents of a series of inputs from the input unit.

FIG. 1

EP 0 410 418 A2

## INPUT DEVICE FOR COMPUTER AND METHOD FOR INPUT INTERRUPT

### BACKGROUND OF THE INVENTION

#### Field of the Invention:

The present invention relates to an input device for a computer and a method for input interrupt. In particular, the present invention relates to improvements on a means of repeatedly executing unspecified inputs in an input device for a computer, as well as improvements on a method for repeating an input interrupt in a method for controlling an input interrupt.

#### Description of the Related Art:

In computers, a program stored in advance in an auxiliary storage unit is transferred to a memory of a main body, and the program is executed in accordance with an input from a keyboard or the like.

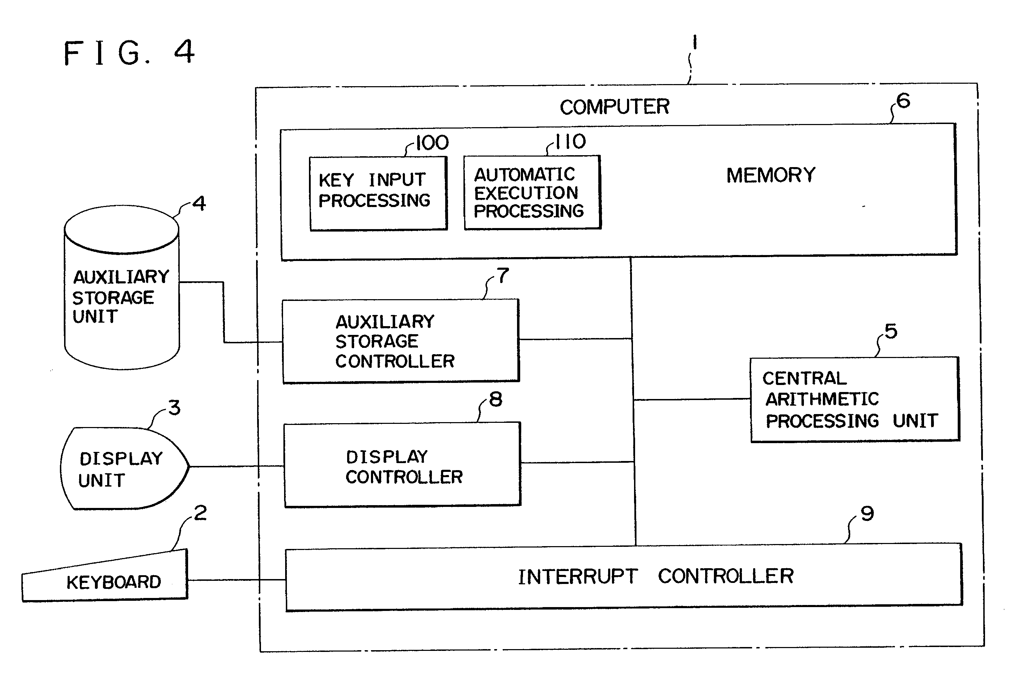

Fig. 4 illustrates a configuration of a conventional computer, particularly a configuration of portions concerning a keyboard input.

A keyboard 2, a display unit 3, and an auxiliary storage unit 4 are connected to a computer 1 shown in this drawing.

The keyboard 2 is a member operated by the operator and is used for inputting into the computer 1 data necessary for execution of a program as well as a command from the operator for the computer 1.

The display unit 3 is a unit for displaying the result of execution of the program in the computer 1. Through the operation of this unit, the operator is capable of ascertaining the current operating state of the computer 1 or the result of an arithmetic operation which the operator is seeking.

The auxiliary storage unit 4 is a unit for storing the program executed by the computer 1 as well as data necessary for executing the program. The computer 1 reads or stores the program or data from the auxiliary storage unit 4, as necessary.

The computer 1 comprises a central arithmetic processing unit 5, a memory 6, an auxiliary storage controller 7, a display controller 8, and an interrupt controller 9.

The central arithmetic processing unit 5 is a unit for executing arithmetic processing in the computer. That is, the central arithmetic processing unit 5 executes predetermined arithmetic processing in accordance with the program read from the auxiliary storage unit 4.

The memory 6 is a unit for storing a program to be executed by the central arithmetic processing unit 5. That is, the program read from the auxiliary storage unit 4 by the computer 1 is temporarily stored in this memory 6.

The auxiliary storage controller 7 is a unit for controlling access to the auxiliary storage unit 4. Similarly, the display controller 8 is a unit for controlling display on the display unit 3.

The interrupt controller 9 is a unit for generating an interrupt in response to an input from the keyboard 2. This interrupt, i.e., a key input interrupt, is processed by a key input processing routine 100 in the program stored in the memory 6.

It should be noted that the program stored in the memory 6 has an automatic execution processing routine designated at 110 in the drawing. This automatic execution processing routine is a routine for effecting predetermined processing with respect to a specific application.

The processing by the device having the above-described configuration is executed as follows.

First, the computer 1 reads the program from the auxiliary storage unit 4, and stores the same in the memory 6. The central arithmetic processing unit 5 effects arithmetic processing in accordance with the program.

At this juncture, when the central arithmetic processing unit 5 requires certain data, display to that effect is given on the screen of the display unit 3. Upon viewing this display, the operator operates the keyboard 2. The data inputted by this operation is used for arithmetic processing by the central arithmetic processing unit 5, e.g., for the execution of the automatic execution processing routine 110.

In addition, when the operator issues an interrupt request by operating the keyboard 2, the interrupt controller 9 generates a key input interrupt. The central arithmetic processing unit 5 executes the key input processing routine 100 in response to this interrupt. Subsequently, if the operator inputs a command by operating the keyboard 2, the input of the command is processed by the key input processing routine 100. In addition, if the operator inputs data, the data is similarly processed by the key input processing routine 100.

Thus, it has hitherto been possible to effect a key input interrupt.

In this interrupt, however, when processing is to be effected with, for instance, a series of commands and data, it is necessary to repeat inputs by the number of the commands. That is, the operator is obliged to effect monotonous operations repeatedly.

2

In addition, in cases where the computer 1 is adapted to execute a plurality of processings in parallel, or in cases where the computer 1 is in charge of controlling a plurality of other computers, the operator is obliged to effect monotonous operations repeatedly in correspondence with the number of parallel processings or the number of computers subject to the control.

Thus, the repeated operation has hitherto involved labor and time, so that there have been limits to the usability of an input device for a computer.

## SUMMARY OF THE INVENTION

Accordingly, an object of the present invention is to reduce the labor and time involved in input operation and improve the usability of an input device for a computer, thereby overcoming the above-described drawbacks of the conventional art.

To this end, in accordance with the present invention, there is provided an input device for a computer comprising: an input means, an auxiliary storage means, an input storage means, an interrupt controller, an automatic input means, and an arithmetic processing unit.

A description will be given here of the functions and operation of the constituent members of this device.

First, the input means is a member operated by the operator. Through this operation, data and a command are inputted. Specifically, the input means is a keyboard, a mouse, or the like.

The auxiliary storage means is a means for storing the content of an input from the input means. This storage is effected in the form of storage by the input storage means. That is, the input storage means causes the auxiliary storage means to store the content of the input from the input means as a series of data rows.

The data rows thus stored are read by the automatic input means. This reading is effected in correspondence with an input interrupt generated by the interrupt controller.

The data rows thus read are used for arithmetic processing by the arithmetic processing unit. These data rows are constituted by commands and data inputted from the input means. The arithmetic processing unit executes arithmetic processing in correspondence with these commands and data.

As a result of the above-described operation, in the input device for a computer in accordance with the present invention, it is possible to reduce the labor and time required for inputting in cases where a series of commands and data are to be executed repeatedly. In other words, usability concerning input operation improves.

It is preferable to provide an auxiliary storage controller for controlling the access of the auxiliary storage means, a display unit for displaying the result of caculation by the arithmetic processing unit, and a display controller for controlling the display by the display unit.

In addition to such a device, in accordance with the present invention, there is provided a method for input interrupt in a computer. This method, which is realizable by means of the above-described device, comprises the steps of:

(a) storing the contents of a series of inputs from input means in auxiliary storage means as a data row;

(b) generating an input interrupt;

(c) reading the data row stored in the auxiliary storage means when an input interrupt is generated; and

(d) effecting arithmetic processing on the basis of a command and data which constitute the data row read.

Preferably, the detection of an end of the data row may be effected with data of a predetermined content (data indicating an end). In this case, the detection of the end is facilitated remarkably.

## BRIEF DESCRIPTION OF THE DRAWINGS

Fig. 1 is a block diagram illustrating a configuration of an input device for a computer in accordance with an embodiment of the present invention;

Figs. 2A and 2B are flowcharts illustrating the flow of key input storage processing and automatic key input processing in the embodiment shown in Fig. 1, respectively;

Fig. 3 is a block diagram illustrating a configuration of an input device for a computer in accordance with another embodiment of the present invention; and

Fig. 4 is a block diagram illustrating a configuration of an example of a conventional input device for a computer.

## DESCRIPTION OF THE PREFERRED EMBODIMENTS

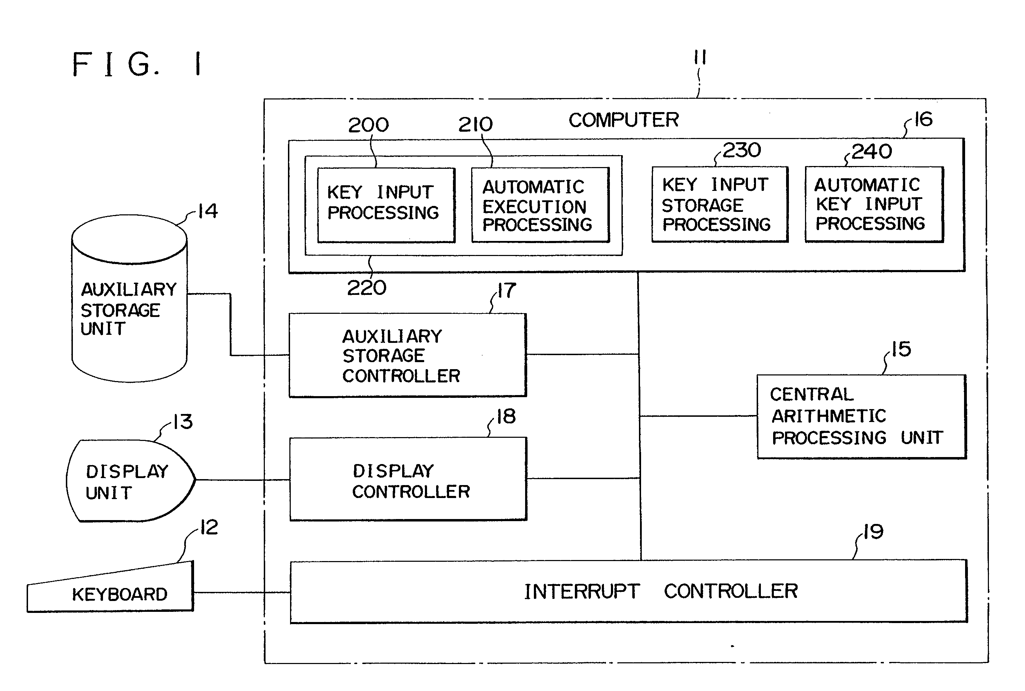

Fig. 1 shows a configuration of a device in accordance with an embodiment of the present invention.

The configuration of the device shown in this drawing is substantially similar to that of the conventional example shown in Fig. 4 except that a key input storage processing routine 230 and an automatic key input routine 240 are provided in addition to an application program 220 having a key input processing routine 200 and an automatic execution processing routine 210.

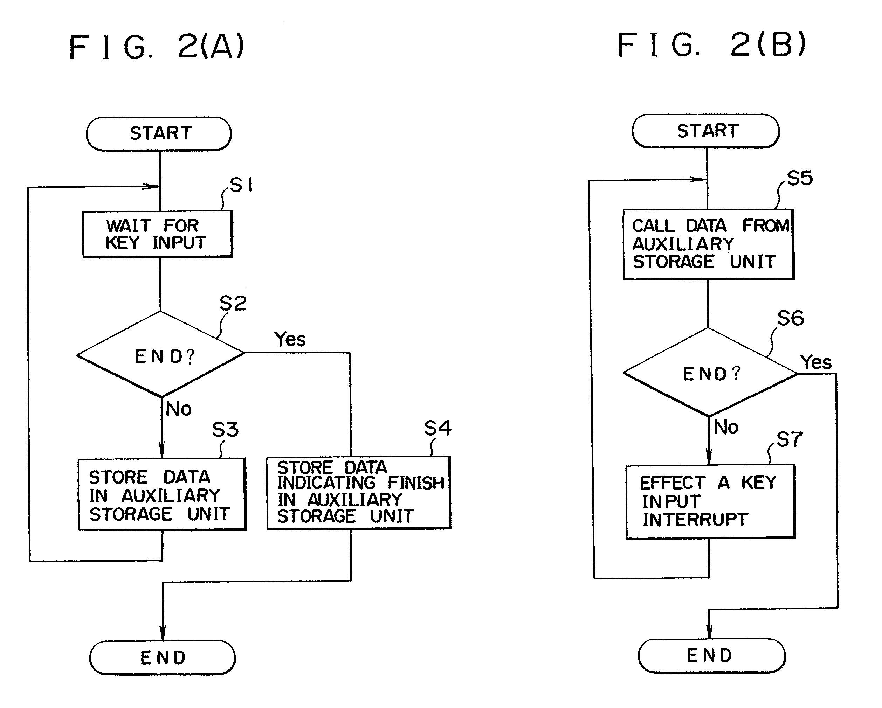

The operation of the routines 230 and 240 is a portion characterizing the present invention, and a description thereof will be given hereinunder with reference to Figs. 2A and 2B.

First, a description will be given of the operation of the key input storage processing routine 230 shown in Fig. 2A.

In this routine 230, processing is commenced by waiting for a key input operation by the operator. That is, a waiting state continues until the operator operates a keyboard 12 (Step S1).

Then, a determination is made as to whether the content inputted from the keyboard 12 is a command/data or data indicating an end (Step S2). In this Step S2, if it is determined that the input from the keyboard 12 is the data indicating an end, the operation proceeds to Step S4, and the operation proceeds to Step S3 in the other cases.

In Step S3, the content of a key input is transferred to and stored in an auxiliary storage unit 14. Namely, the storage of the key input is carried out. Upon execution of this Step S3, the operation returns to Step S1, and a computer 11 again waits for a key input.

In Step S4, the data indicating an end is stored in the auxiliary storage unit 14. Subsequently, the processing of the key input storage processing routine 230 ends.

Referring now to Fig. 2B, a description will be given of the operation of the automatic key input routine 240.

As shown in this drawing, the reading of data from the auxiliary storage unit 14 is executed (Step S5). In an ensuing Step S6, a determination is made as to whether this data is the data indicating an end. If it is the data indicating an end, the automatic key input routine 240 ends, and in the other cases a central arithmetic processing unit 15 causes an interrupt controller 19 to operate (Step S7). That is, in Step S7, a key input interrupt is generated. Subsequently, the processing is repeated again from Step S5.

Accordingly, in this embodiment, when processing is to be effected in correspondence with a series of key inputs, the series of key inputs are stored in the auxiliary storage unit 14 by executing the key input storage processing routine 230 in advance, and the automatic key input routine 240 may be executed, as required.

As a result, it becomes unnecessary for the operator to effect key inputs again or repeatedly.

Accordingly, in accordance with this embodiment, it is possible to reduce the labor and time involved in key input operation.

In addition, in an application program 230, it becomes possible to repeatedly call and execute the automatic key input routine 240 through the automatic execution processing routine 210. Accordingly, in cases where an identical processing is executed repeatedly in a heat run test of the application program 230 or in a demostration, it becomes possible to effect such an operation with reduced labor.

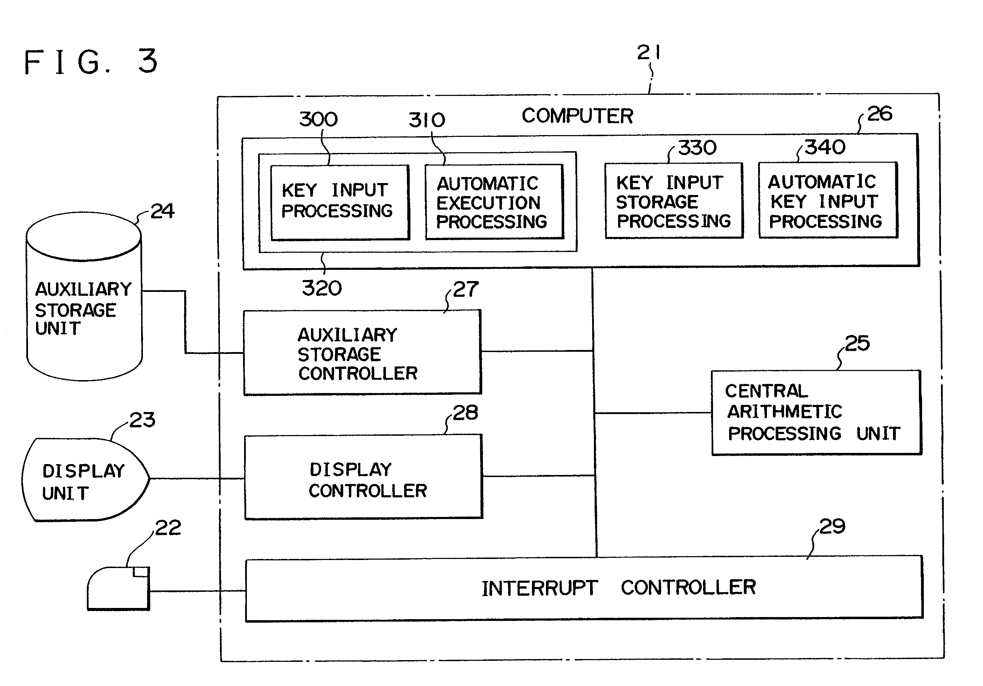

It should be noted that, as shown in Fig. 3, an input unit such as a mouse 22 may be used instead of the keyboard 12.

An input device for a computer, which is used for executing a program in a computer by inputting a command and data, temporarily stores the contents of a series of inputs from an input unit in an auxiliary storage unit, and generates an input interrupt by reading the contents of the series of inputs from the auxiliary storage unit. In a method for input interrupt in a computer, which is used for generating an input interrupt in response to an input from an input unit, an interrupt is generated collectively for the contents of a series of inputs from the input unit.

## Claims

1. An input device for a computer comprising:
input means for inputting data and a command through an operation by an operator;
auxiliary storage means for storing the content of an input from said input means;
input storage means for causing the content of the input from said input means to be stored in said auxiliary storage means as a series of data rows;
an interrupt controller for generating an input interrupt;
automatic input means for reading the series of data rows stored in said input storage means when an input interrupt is generated; and
an arithmetic processing unit for effecting arithmetic processing in accordance with the command and data both constituting the data rows read by said automatic input means.

2. An input device for a computer according to Claim 1, wherein said input means is a keyboard.

3. An input device for a computer according to Claim 1, wherein said input means is a mouse.

4. An input device for a computer according to Claim 1, further comprising an auxiliary storage controller for controlling access to said auxiliary storage means.

5. An input device for a computer according to Claim 1, further comprising a display unit for displaying the result of calculation by said arithmetic processing unit.

6. An input device for a computer according to Claim 5, further comprising a display controller for controlling display by said display unit.

7. A method for input interrupt in a computer, comprising the steps of:

storing the contents of a series of inputs from input means in auxiliary storage means as a data row;

generating an input interrupt;

reading the data row stored in said auxiliary storage means when an input interrupt is generated; and

effecting arithmetic processing on the basis of a command and data which constitute the data row read.

8. A method for input interrupt according to Claim 7, wherein a series of data rows stored in said auxiliary storage means constitute data rows which are ended by data indicating an end, and wherein the reading of the data row from said auxiliary storage means ends in response to the reading of the data indicating an end.

9. A method for input interrupt according to Claim 7, wherein said input means is a keyboard.

10. A method for input interrupt according to Claim 9, wherein a series of data rows stored in said auxiliary storage means constitute data rows which are ended by data indicating an end, and wherein the reading of the data row from said auxiliary storage means ends in response to the reading of the data indicating an end.

11. A method for input interrupt according to Claim 7, wherein said input means is a keyboard.

12. A method for input interrupt according to Claim 11, wherein a series of data rows stored in said auxiliary storage means constitute data rows which are ended by data indicating an end, and wherein the reading of the data row from said auxiliary storage means ends in response to the reading of the data indicating an end.

13. A method for input interrupt according to Claim 7, wherein access to said auxiliary storage means is controlled by an auxiliary storage controller.

14. A method for input interrupt according to Claim 7, wherein the result of calculation of an arithmetic processing unit is displayed on a display unit.

15. A method for input interrupt according to Claim 14, wherein display by said display unit is controlled by a display controller.

16. A method for input interrupt according to Claim 10, wherein the result of calculation by an arithmetic processing unit is displayed on a display unit, and display by said display unit is controlled by a display controller.

FIG. I

# FIG. 2(A)

```
        ┌─────────┐
        │  START  │
        └────┬────┘
             │
    ┌────────▼────────┐  S1
    │  WAIT FOR       │
    │  KEY INPUT      │
    └────────┬────────┘
             │
          ╱──▼──╲  S2          Yes
         ╱ END?  ╲──────────────┐
         ╲       ╱              │
          ╲──┬──╱               │
             │No                │
    ┌────────▼────────┐  S3  ┌──▼──────────────┐  S4
    │  STORE DATA     │      │ STORE DATA       │
    │  IN AUXILIARY   │      │ INDICATING FINISH│
    │  STORAGE UNIT   │      │ IN AUXILIARY     │
    └─────────────────┘      │ STORAGE UNIT     │
                             └──────────────────┘
             ┌─────────┐
             │   END   │
             └─────────┘
```

# FIG. 2(B)

```
        ┌─────────┐
        │  START  │
        └────┬────┘
             │
    ┌────────▼────────┐  S5
    │  CALL DATA FROM │
    │  AUXILIARY      │
    │  STORAGE UNIT   │
    └────────┬────────┘
             │
          ╱──▼──╲  S6
         ╱ END?  ╲────── Yes ──┐
         ╲       ╱             │
          ╲──┬──╱              │
             │No               │
    ┌────────▼────────┐  S7     │
    │  EFFECT A KEY   │         │
    │  INPUT          │         │
    │  INTERRUPT      │         │
    └─────────────────┘         │
             ┌─────────┐
             │   END   │
             └─────────┘
```

EP 0 410 418 A2

# FIG. 3

COMPUTER — 21

**26**

- KEY INPUT PROCESSING — 300
- AUTOMATIC EXECUTION PROCESSING — 310
- KEY INPUT STORAGE PROCESSING — 330
- AUTOMATIC KEY INPUT PROCESSING — 340

320

AUXILIARY STORAGE UNIT — 24

AUXILIARY STORAGE CONTROLLER — 27

DISPLAY UNIT — 23

DISPLAY CONTROLLER — 28

22

INTERRUPT CONTROLLER — 29

CENTRAL ARITHMETIC PROCESSING UNIT — 25

EP 0 410 418 A2

8

# FIG. 4

COMPUTER

KEY INPUT PROCESSING ~100

AUTOMATIC EXECUTION PROCESSING ~110

MEMORY ~6

AUXILIARY STORAGE UNIT ~4

AUXILIARY STORAGE CONTROLLER ~7

CENTRAL ARITHMETIC PROCESSING UNIT ~5

DISPLAY UNIT ~3

DISPLAY CONTROLLER ~8

KEYBOARD ~2

INTERRUPT CONTROLLER ~9

EP 0 410 418 A2